Europäisches Patentamt

European Patent Office

Office européen des brevets

(19)

(11) Veröffentlichungsnummer : **0 289 016 B1**

# (12) EUROPÄISCHE PATENTSCHRIFT

(45) Veröffentlichungstag der Patentschrift :
28.08.91 Patentblatt 91/35

(51) Int. Cl.⁵ : **B60R 22/00, B60R 22/44**

(21) Anmeldenummer : 88106823.3

(22) Anmeldetag : 28.04.88

(54) Vorrichtung zum Abheben eines Teils eines Sicherheitsgurtes.

(30) Priorität : 30.04.87 DE 3714575

(43) Veröffentlichungstag der Anmeldung :
02.11.88 Patentblatt 88/44

(45) Bekanntmachung des Hinweises auf die
Patenterteilung :
28.08.91 Patentblatt 91/35

(84) Benannte Vertragsstaaten :
AT BE CH ES FR GB GR IT LI SE

(56) Entgegenhaltungen :
DE-A- 3 519 346
DE-A- 3 526 964
DE-U- 8 032 064
FR-A- 2 280 400
FR-A- 2 340 104

(73) Patentinhaber : Hundhammer, Konrad,
Dipl.-Ing.
Kochelerstrasse 13
W-8177 Bichl (DE)

(72) Erfinder : Hundhammer, Konrad, Dipl.-Ing.
Kochelerstrasse 13
W-8177 Bichl (DE)

(74) Vertreter : Müller, Hans-Jürgen, Dipl.-Ing. et al
Müller, Schupfner & Gauger
Maximilianstrasse 6 Postfach 10 11 61
W-8000 München 1 (DE)

## Beschreibung

Die Erfindung bezieht sich auf eine Vorrichtung zum Abheben eines Teils eines Sicherheitsgurtes vom betreffenden Körperteil eines fahrenden Passagiers nach dem Oberbegriff des Patentanspruchs 1.

Eine derartige Vorrichtung ist bereits bekannt (DE-A-3519346). Sie gestattet das leichte Abheben von Teilen des Sicherheitsgurtes vom Fahrer oder Beifahrer und verbessert daher den Fahrkomfort des Passagiers mit einfachen Mitteln. Zu diesem Zweck wird ein Band oder dgl. Befestigungsmittel zwischen den Sicherheitsgurt und einen Teil des Fahrzeugs so gespannt, daß dieses Band denjenigen Teil des Sicherheitsgurtes vom betreffenden Körperteil des Passagieres ein Stück weit abhebt, bei dem das Belästigungsgefühl, wie im Bauch oder Brustbereich, nicht verursacht werden soll. Es versteht sich, daß das Abheben des Sicherheitsgurtteiles dessen Funktion nicht außer Kraft setzen darf. Ohne großen finanziellen Aufwand hebt die Vorrichtung den betreffenden Teil des Sicherheitsgurtes ein Stück weit, beispielsweise wenige Zentimeter, von insbesondere der Brust, dem Hals oder auch dem Becken des Passagiers ab, so daß er dort auch bessere Bewegungsfreiheit hat, wenn es seine Sitzposition verändern will.

Darüber hinaus ist es bekannt, die Länge des freien Teils des Befestigungsmittels duch Einhängen eines Endhakens in ein bestimmtes Glied des als Gliederkette ausgebildeten Befestigungsmittels zu verändern (DE-U-8501400) oder das Befestigungsmittel mit einem Saugnapf an der Frontschiebe zu befestigen (DE-U-8032064).

Zum Straffen von Sicherkeitsgunten sind auch Ratschensperren bekannt, welche das Ausgeben von guntlänge nur nach Entsperren der Ratschensperre erlauben (FR-A-2280400).

Der Erfindung liegt die Aufgabe zugrunde, die Funktion bei unverändert einfacher Handhabung zu verbessern und das Ausmaß des Abhebens des Sicherheitsgurtes von der betreffenden Körperstelle mit einfachen Mitteln zu steuern.

Die Erfindung ist im Patentanspruch 1 gekennzeichnet und in Unteransprüchen sind weitere Ausbildungen derselben beansprucht.

Gemäß der Erfindung ist die Aufrollvorrichtung mit einer Brems- oder gar Sperreinrichtung ausgestattet. Diese verhindert das automatische Aufrollen bzw. Aufwickeln des Bandes oder dergleichen, wodurch eine unerwünschte Verkürzung der Länge des Befestigungsmittels zwischen der Angriffsstelle am Sicherheitsgurt und der Befestigungsstelle am Kraftfahrzeug und daher ein weiteres Abheben des Sicherheitsgurtes verhindert wird. Darüber hinaus kann die Brems einrichtung in der Aufrollvorrichtung auch das Abwickeln, das heißt das Ausgeben von Befestigungsmittellänge behindern. Die Einrichtung ist als Ratschensperre und/oder Rutschkupplung ausgebildet. Nach der bevorzugten Ausbildung wird auch ungewolltes selbsttätiges Verlängern der Länge des Befestigungsmittels zwischen der Angriffsstelle am Sicherheitsgurt und der Befestigungsstelle am Kraftfahrzeug zumindest behindert. Jedenfalls wird das Ausmaß des Abhebens des Sicherheitsgurtteils von der betreffenden Körperstelle des Passagiers nicht ungewollt selbsttätig verkürzt. Darüber hinaus ist die Brems- bzw. Sperreinrichtung mit einer manuell betätigbaren Betätigungseinrichtung versehen, welche die Sperrwirkung außer Funktion setzt, so daß der Passagier die jeweils zum Abheben des Sicherheitsgurts von der betreffenden Körperstlle des Passagiers zur Verfügung stehende Länge des zur Verfügung stehenden Befestigungsmittels leicht aus der Sitzposition heraus einstellen kann, ohne sich weit vorbeugen zu müssen. Besonders vorteilhaft ist es, wenn die Aufrollvorrichtung am gurtseitigen Ende des Befestigungsmittels angeordnet ist, denn dadurch ist eine genaue Einstellung bei großen Fahrzeugen auch ohne Vorbeugen oder sonstige Veränderung der beim Fahren einzunehmenden Sitzposition möglich.

Es empfiehlt sich, wenn die Bremseinrichtung das Abwickeln erst bei Erreichen einer bestimmten Grenzkraft erlaubt, was vorzugsweise durch eine Rutschkupplung erreichbar ist, die zwar das Abwickeln bzw. Ausgeben von Bandlänge aus der Aufrollvorrichtung nach Überwinden der Grenzkraft zuläßt, das automatische Aufrollen bzw. Aufwickeln bzw. Einziehen des Bandes, der Schnur oder dergleichen wie im Falle der Ratschensperre dagegen sperrt.

Weitere Ausbildungen der Erfindung sind anhand der Figurenbeschreibung noch näher erläutert.

Anhand der Zeichnung sind Ausführungsbeispiele der Erfindung schematisch im folgenden erläutert. Darin zeigen :

Fig. 1 die schematische Seitenansicht auf eine erfindungsgemäße Vorrichtung in dem Zustand, in dem diese mit dem angelegten Sicherheitsgurt verbunden und das Band in ein Halteelement festgeklemmt ist, das innen am Seitenholm des Fahrzeugs befestigt ist, der das Frontfenster des Fahrzeuges seitlich abstützt ;

Fig. 2 eine entsprechende Seitenansicht, bei der die erfindungsgemäße Vorrichtung innen an der Frontscheibe befestigt ist, und

Fig. 3 eine entsprechende Teilansicht der beiden Enden der Vorrichtung.

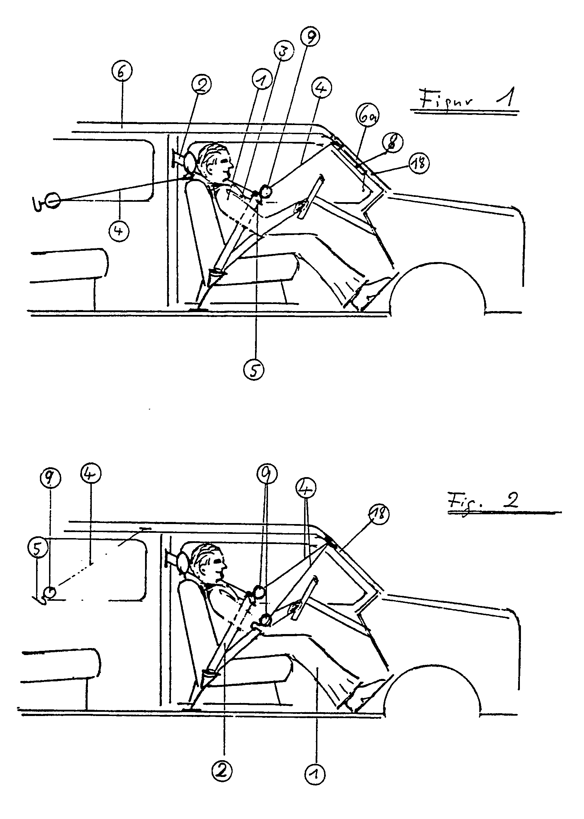

Gemäß Fig. 1 befindet sich der Passagier 1, hier der Fahrzeuglenker, in der Sitzposition ; er hat den Sicherheitsgurt 2 angelegt, so daß sich ein Teil desselben über die Hüfte spannt, während der andere Teil diagonal über dessen Brustteil und Schulter an die Anlenkungsstelle im oberen Teil des senkrechten Holms der Fahrzeugkarosserie verläuft. Da die Bewegungsfreiheit im Brustbereich beeinträchtigt ist, wenn sich der Sicherheitsgurt 2 an die betreffenden Körperstellen 3 des Passagiers 1 anlegt, wird dieser Nachteil gemäß Fig. 1 dadurch behoben, daß ein Band 4 als Befestigungsmittel mit Hilfe eines Befestigungselementes 5 an denjenigen Teil des Sicherheitsgurtes 2 angelegt ist, der sich vor der Körperstelle 3 — hier die Brust — des Passagiers 1 befindet, an dem das Belästigungsgefühl besonders ausgeprägt ist. Das Band 4 verläuft von diesem Bereich des Sicherheitsgurtes 2 schräg nach vorn und oben bis zu einem rohrförmigen Halteelement 8. Das Ende des Befestigungsmittels, des Bandes 4, einer Kordel, einer Schnur oder dergleichen Befestigungsmittels, ist innerhalb des Halteelements 8 festgeklemmt. Dabei kann der Passagier 1 die freie Bandlänge zwischen dem Befestigungselement 5 bzw. der Anlenkungsstelle am Sicherheitsgurt 2 und dem Halteelement 8 mittels einer Aufrollvorrichtung 9 manuell einstellen, ohne sich vorzubeugen. Hierdurch ist die freie Länge des Befestigungsbandes 4 so einstellbar, daß der Sicherheitsgurt 2 an der betreffenden Körperstelle 3, hier dem Brustbereich, ein kleines Stück weit abgehoben ist, ohne die Sicherheitsfunktion des Sicherheitsgurtes 2 außer Kraft zu setzen. Das Halteelement 8, an dem ein Ende des Befestigungsmittels 4 befestigt ist, ist hierbei an dem Seitenholm 6a der Karrosserie befestigt, der einerseits zur Abstützung des oberen Rahmenteils mit dem Dach und andererseits zur seitlichen Begrenzung und Halterung der Frontscheibe 18 des Kraftfahrzeuges dient.

Das Befestigungselement 5 kann aus einer Lasche bestehen, die durch den Gurt 2 gezogen wird. Diese Lasche kann längs des Sicherheitsgurtes 2 verschiebbar sein. Das Befestigungselement 5 kann auch in Form eines Hakens ausgebildet sein, um in der angelegten Position des Sicherheitsgurtes 2 über den betreffenden Teil des Sicherheitsgurtes gesteckt zu werden und sich in besonderen Gefahrensituationen oder bei Auftreten großer Kräfte selbsttätig wieder vom Sicherheitsgurt 2 zu lösen.

Das Band 4 ist in der Spannlage vor dem Passagier 1 insb. seitlich und overhalb desselben versetzt an der Karrosserie oder Frontscheibe 18 befestigbar.

Die Befestigungsstelle des Bandes 4, der Schnur oder dergl. Befestigungsmittels an der Fahrzeugkarrosserie 6 bzw. dem Halteelement 8 kann auf verschiedene Weise ausgebildet sein, beispielsweise — wie oben schon angezeigt — durch Festklemmen im Halteelement 8 oder auch mittels Haken oder anderer Feststellvorrichtungen.

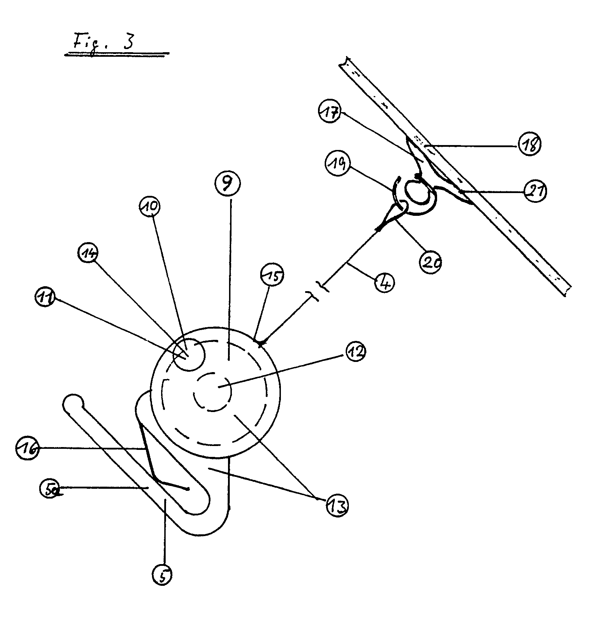

Gemäß Fig. 2 wird sowohl der über das Becken des Passagiers 1 reichende Teil des Sicherheitsgurtes 2 als auch der sich über die Brust des Passagiers 1 spannende Teil des Sicherheitsgurtes 2 durch je eine Vorrichtung gemäß der Erfindung von der betreffenden Körperstelle abgehoben. Zu diesem Zweck ist eine kordelartige Schnur als Befestigungsmittel 4 über eine Aufrollvorrichtung 9 mit dem Sitzgurt 2 im Beckenbereich des Passagiers 1 und ein weiteres Befestigungsmittel 4 über eine weitere Aufrollvorrichtung 9 mit dem Sicherheitsgurt 2 im Bereich der Brust des Passagiers 1 verbunden. Beide Befestigungsmittel sind an der Windschutzscheibe 18 des Kraftfahrzeuges in der in Fig. 3 näher beschriebenen Weise befestigt.

Darüber hinaus kann auch noch ein weiteres Befestigungsmittel 4 am Sitz des Fahrers befestigt sein, um über eine Aufrollvorrichtung 9 und ein als Lasche ausgebildetes Befestigungselement 5 mit dem hier nicht dargestellten Sicherheitsgurt eines im Fond des Kraftfahrzeugs sitzenden Passagiers verbunden zu werden, damit auch dort der Sicherheitsgurt vom Beckenbereich und/oder Brustbereich etwas abhebbar ist.

Gemäß Fig. 3 weist die Aufrollvorrichtung 9 eine Feder 12, insbesondere eine Spiralfeder auf, welche das Band 4 in das Gehäuse der Aufrollvorrichtung 9 einzuziehen bzw. aufzuwickeln sucht. Das von der Aufrollvorrichtung 9 abgewandte Ende des Befestigungsmittels 4 ist mit Hilfe eines Karabinerhaken 20 oder einer Schlaufe an einem Haltehaken 19 oder dergleichen Halteorgane einhängbar, das an einem Saugkörper 17 befestigt ist, welcher gegebenenfalls zusätzlich zu der durch Saugkräfte bewirkten Haltekraft durch eine insbesondere selbstklebende Kleberschicht 21 an der Windschutzscheibe bzw. Frontscheibe 18 des Kraftfahrzeugs innen befestigt ist.

Die Aufrollvorrichtung 9 ist mit einer Bremseinrichtung 10 versehen, welche durch eine Betätigungseinrichtung 11 in der schon genannten Weise betätigbar ist. Die Betätigungseinrichtung 11 weist einen Hebel, Bügel, Knopf 14 oder dergl. Organ auf, durch dessen Betätigen die Bremseinrichtung 10 lösbar ist, so daß die freie Länge des Befestigungsmittels 4 veränderbar ist.

Die Bremseinrichtung 10 kann eine Ratschensperre aufweisen, die das Abwickeln zuläßt, das automatische Aufrollen bzw. Aufwickeln bei Betätigen der Betätigungseinrichtung 11 über den Knopf 14 jedoch sperrt.

Die Aufrollvorrichtung 9 befindet sich zweckmäßigerweise im Bereich des Befestigungselementes 5 und ist nach Fig. 3 mit diesem einstückig verbunden. Das Befestigungselement 5 ist hier in Form eines gebogenen, an einer Seite frei endenden, federelastischen Klemmbügels 16 ausgebildet, der sich unter Klemmwirkung an den in Fig. 3 nicht gezeigten Sicherheitsgurt 2 anlegt ; der Sicherheitsgurt 2 befindet sich zwischen dem an

EP 0 289 016 B1

einer Seite frei endenden langgestreckten Armes 5a des Befestigungselementes 5 und dem konvex gebogenen Klemmbügel 16, der vom eingefügten Sicherheitsgurt 2 ein Stück weit zurück-bzw. vom Arm 5a) wegdrückbar drückbar ist. Das Befestigungselement 5 bildet mit dem Gehäuse der Aufrollvorrichtung 9 einen integrierten Bausatz 13.

Die Bremseinrichtung 10 kann auch eine Rutschkupplung aufweisen, die das Abwickeln zuläßt, das automatische Aufrollen dagegen sperrt. Außerdem empfiehlt es sich, wenn die Bremseinrichtung 10 eine Klemmeinrichtung 15 zum Festklemmen des Befestigungsmittels 4 in der Aufroll- bzw. Aufwickelrichtung aufweist.

Das Befestigungsmittel 4 kann auch selbst gummielastisch dehnbar sein.

Das Halteelement 8, das nach Fig. 3 einen Saugkörper 17 aufweist, sollte einen deformierbaren Teil zum Befestigen am Fahrzeug aufweisen, wodurch Fahrzeugkonturen besser gefolgt werden kann. Hierzu eignen sich vor allem elastomere Kunststoffe. Um im Falle der Verwendung eines Saugkörpers 17 eine möglichst gleiche Verteilung der über das Befestigungsmittel 4 übertragenen Zugkräfte zwischen Saugkörper 17 und Frontscheibe 18 oder einem anderem Teil des Kraftfahrzeugs zu erzielen, empfiehlt es sich, wenn der Haltehaken 19 oder dergleichen Halteorgan mittig am Saugkörper 17 angreift und ebenso das Befestigungsmittel 9 über beispielsweise den Karabinerhaken 20 oder Schlaufe eine solche zentrierte Kraftübertragung ermöglicht.

**Patentansprüche**

1. Vorrichtung zum Abheben eines Teils eines Sicherheitsgurtes (2) vom betreffenden Körperteil (3) des Fahrzeugpassagiers (1), über den der Sicherheitsgurt (2) gelegt ist, bei der ein biegbares Befestigungsmittel (4), wie Band, Schnur, Faden, Draht oder dergleichen, an einem vor dem Passagier (1) am Fahrzeug befestigten Halteelement (8) festspannbar und an einem Ende mit einem Befestigungselement (5) versehen ist, das an der vom Körperteil (3) des Passagiers (1) abzuhebenden Stelle des Sicherheitsgurtes (2) an diesem angreift, und bei der die Länge des Befestigungsmittels (4) zwischen dem Befestigungselement (5) und dem Halteelement (8) mittels einer Aufrollvorrichtung (9) veränderbar ist, dadurch gekennzeichnet, daß die Aufrollvorrichtung (9) für das Befestigungsmittel (4) eine Brems- und/oder Sperreinrichtung (10) in Form einer Ratschensperre und/oder einer Rutschkupplung aufweist, welche das automatische Aufrollen bzw. Aufwickeln bremst bzw. sperrt und deren Sperrwirkung durch eine manuell betätigbare Betätigungseinrichtung (11) außer Funktion setzbar ist.

2. Vorrichtung nach Anspruch 1, dadurch gekennzeichnet, daß die Brems- und/oder Sperreinrichtung (10) das Abwickeln erst bei Erreichen einer bestimmten Grenzkraft erlaubt.

3. Vorrichtung nach Anspruch 1 oder 2, dadurch gekennzeichnet, daß die Brems- und/oder Sperreinrichtung (10) eine Klemmeinrichtung (15) zum Festklemmen des Befestigungsmittels (4) in der Aufroll- bzw. Aufwickelrichtung aufweist.

4. Vorrichtung nach einem der vorhergehenden Ansprüche, dadurch gekennzeichnet, daß sich die Aufrollvorrichtung (9) am gurtseitigen Ende des Befestigungselements (5) befindet.

5. Vorrichtung nach Anspruch 4, dadurch gekennzeichnet, daß die Aufrollvorrichtung (9) mit dem Befestigungselement (5) als Baueinheit (13) ausgebildet ist.

6. Vorrichtung nach einem der vorhergehenden Ansprüche, dadurch gekennzeichnet, daß die Betätigungseinrichtung (11) einen Hebel, Bügel oder Knopf (14) aufweist, durch dessen Betätigen die Brems- und/ oder Sperreinrichtung (10) lösbar ist.

7. Vorrichtung nach einem der vorhergehenden Ansprüche, dadurch gekennzeichnet, daß das Befestigungselement (5) auf den Sicherheitsgut (2) aufsteckbar ist und einen Klemmbügel (16) aufweist, der den Sicherheitsgurt (2) unter federelastischer Klemmwirkung an einen frei endenden Arm (5a) andrückt.

8. Vorrichtung nach einem der vorhergehenden Ansprüche, dadurch gekennzeichnet, daß das Halteelement (8) für das Befestigungsmittel (4) einen Saugkörper (17) zum Befestigen am Fahrzeug, insbesondere dessen Frontscheibe (18), aufweist.

9. Vorrichtung nach Anspruch 8, dadurch gekennzeichnet, daß am Saugkörper (17) ein Haltehaken (19) oder dergleichen Halteorgan befestigt ist, an den das Befestigungsmittel (4), insbesondere mittels Karabinerhaken (20), insbesondere zentriert einhängbar ist.

10. Vorrichtung nach Anspruch 8 oder 9, dadurch gekennzeichnet, daß der Haltehaken (19) in Richtung der Zugkraft der Aufrollvorrichtung vom Saugkörper (17) absteht.

**Claims**

1. Device for lifting part of a seat belt (2) from the respective part of the body (3) of the vehicle passenger

4

(1) who is fastened with the seat belt (2), in which a flexible fastening means (4) such as a fastening strap, a string, thread, wire or the like can be clamped to a holding element (8) mounted to the vehicle in front of the passenger (1) and which is provided at one end with a fastening element (5) which is fixed to the seat belt (2) just at the point where it is to be lifted off from the part (3) of the passenger's body (1), and in which the length of the fastening means (4) between the fastening element (5) and the holding element (8) can be varied by means of a rolling-up device (9), characterized in that the rolling up device (9) for the fastening means (4) comprises a brake and/or interlock means (10) in the form of a ratchet lock and/or slip clutch either braking or interlocking the automatic roll-up or wind-up and the interlocking function of which can be put out of effect by a manually operable actuating means (11).

2. Device according to claim 1, characterized in that the brake and/or interlock means (10) allows the wind-off only upon reaching a certain limit force.

3. Device according to claim 1 or 2, characterized in that the brake and/or interlock means (10) comprises a clamping means (15) for clamping the fastening means (4) in the direction of roll-up or wind-up.

4. Device according to one of the previous claims, characterized in that the rolling-up device (9) is provided at the end of the fastening means (5) on the seat belt.

5. Device according to claim 4, characterized in that the rolling-up device (9) and the fastening means (5) are designed as an integral unit (13).

6. Device according to one of the previous claims, characterized in that the actuating means (11) comprises a lever, hoop or button (14) upon actuation of which the brake and/or interlock means (10) can be unlocked.

7. Device according to one of the previous claims, characterized in that the fastening element (5) can be pushed onto the seat belt (2) and comprises a clamp strap (16) pressing the seat belt (2) against a freely terminating arm (5a) by a spring-elastic clamping action.

8. Device according to one of the previous claims, characterized in that the holding element (8) for the fastening means (4) comprises a suction member (17) to be mounted to the vehicle, in particular, to its windshield (18).

9. Device according to claim 8, characterized in that a holding hook (19) or a similar holding element is attached to the suction member (17), to which the fastening means (4) can be hung up on, in particular, a centred manner, in particular, by way of snap hooks (20).

10. Device according to claim 8 or 9, characterized in that the holding hook (19) projects from the suction member (17) in the direction of the tensile force of the rolling-up device.


**Revendications**

1. Dispositif destiné à soulever une partie d'une ceinture de sécurité (2) de la partie du corps (3) concernée du passager (1) d'un véhicule, sur laquelle est appliquée la ceinture de sécurité (2), dans lequel un moyen de fixation (4) flexible tel qu'un ruban, un cordon, un fil, un fil métallique ou similaire peut être fixé à un élément de maintien (8) fixé sur le véhicule devant le passager (1) et est pourvu, à une extrémité, d'un élément de fixation (5) qui agit sur la ceinture de sécurité (2), à l'endroit où il faut la soulever de la partie de corps (3) du passager (1) et dans lequel la longueur du moyen de fixation (4) peut être modifiée au moyen d'un dispositif d'enroulement (9), entre l'élément de fixation (5) et l'élément de maintien (8), caractérisé en ce que le dispositif d'enroulement (9) pour le moyen de fixation (4) comporte un dispositif de freinage et/ou de blocage (10) sous la forme d'un blocage à cliquets et/ou d'un accouplement à glissement, qui freine ou bloque l'enroulement ou le bobinage automatique et dont l'effet de blocage peut être supprimé par un dispositif d'actionnement (11) à commande manuelle.

2. Dispositif selon la revendication 1, caractérisé en ce que le dispositif de freinage et/ou de blocage (10) n'autorise le déroulement que lorsqu'une force limite déterminée est atteinte.

3. Dispositif selon la revendication 1 ou 2, caractérisé en ce que le dispositif de freinage et/ou de blocage (10) comporte un dispositif de serrage (15) destiné à serrer le moyen de fixation (4) dans le dispositif d'enroulement ou de bobinage.

4. Dispositif selon l'une des revendications précédentes, caractérisé en ce que le dispositif d'enroulement (9) se trouve à l'extrémité côté ceinture de l'élément de fixation (5).

5. Dispositif selon la revendication 4, caractérisé en ce que le dispositif d'enroulement (9) avec l'élément de fixation (5) constitue une unité de construction (13).

6. Dispositif selon l'une des revendications précédentes, caractérisé en ce que le dispositif d'actionnement (11) comporte un levier, un étrier ou un bouton (14) dont l'actionnement libère le dispositif de freinage et/ou de blocage (10).

7. Dispositif selon l'une des revendications précédentes, caractérisé en ce que l'élément de fixation (5) peut être enfilé sur la ceinture de sécurité (2) et comporte un étrier de serrage (16) qui presse la ceinture de sécurité (2), par effet de serrage élastique, contre un bras (5a) se terminant librement.

8. Dispositif selon l'une des revendications précédentes, caractérisé en ce que l'élément de maintien (8) pour le moyen de fixation (4) comporte un corps d'aspiration (17) destiné à être fixé sur le véhicule, notamment sur son pare-brise (18).

9. Dispositif selon la revendication 8, caractérisé en ce que sur le corps d'aspiration (17) est fixé un crochet de maintien (19) ou un organe de maintien similaire sur lequel le moyen de fixation (4) peut être accroché, notamment de manière centrée, en particulier au moyen d'un mousqueton (20).

10. Dispositif selon la revendication 8 ou 9, caractérisé en ce que le crochet de maintien (19) dépasse du corps d'aspiration (17), en direction de la force de traction du dispositif d'enroulement.

Figur 1

Fig. 2

Fig. 3